# EUROPEAN PATENT SPECIFICATION

(11) **EP 2 236 690 B1**
(45) Date of publication and mention of the grant of the patent: **20.07.2016**
(21) Application number: 08864435.6
(22) Date of filing: 19.12.2008
(51) Int. Cl.: B32B 5/18, B32B 27/12, A62C 2/06, E04D 9/00, A62C 3/00, B32B 3/08

(54) **ROOF HAVING FIRE/FLAME-PROOFING FUNCTION, AND FIRE/FLAME-PROOFING NET USED IN THE ROOF**
DACH MIT BRAND-/FLAMMHEMMENDER FUNKTION UND BRAND-/FLAMMHEMMENDES NETZ FÜR DAS DACH
TOIT DOTÉ D'UNE FONCTION PARE-FEU/FLAMME, ET FILET PARE-FEU/FLAMME UTILISÉ DANS LE TOIT

(30) Priority: 21.12.2007 JP 2007329410
(43) Date of publication of application: 06.10.2010
(73) Proprietor: Nishio Supplies Co., Ltd., Kyoto 601-0751 (JP)
(72) Inventor: NISHIO, Haruo, Nantan-shi Kyoto 601-0751 (JP)
(74) Representative: Müller Hoffmann & Partner
(86) International application number: PCT/JP2008/073197
(87) International publication number: WO 2009/081863

(56) References cited:
- EP-A1- 1 464 772
- GB-A- 2 013 753
- JP-A- 6 057 892
- JP-A- 9 032 154
- JP-A- 9 032 154
- JP-A- 2003 190 310
- JP-A- 2003 190 310

## Description

### Technical Field

The present invention relates to a combustible roof to which a fire/flame-proofing function is given, the roof mainly using a plant as a raw material and being a thatch-, straw-, Japanese cypress bark-, Japanese cedar bark-, persimmon- or plate-roof.

### Background Art

A thatch-, straw-, Japanese cypress bark-, Japanese cedar bark-, persimmon- or plate-roof is the oldest roof in human history, and used in many cultural assets in Japan. Such a roof uses a plant etc., existing in nature, as a raw material, thereby having no possibility of being exhausted from the standpoint of resources and turning into toxic industrial waste. Additionally, the roof has an effect of absorbing carbon dioxide in air, as well as various advantages such as saving on air conditioning costs and providing a beautiful exterior.

However, there are disadvantages that the roof easily burns by sparks or flying sparks and the increased possibility that a fire will spread. Therefore, according to the Building Standards Law, a roof in a city planning zone is required to be "a roof which does not generate toxic flames in terms of fireproofness from sparks of a fire" with respect to its performance. In the case where a house is newly built in a city planning zone, it is impossible to build a roof which uses a plant as a raw material such as a thatch- or straw-roof.

Two fire/flame-proofing methods by rough classification have been conventionally used for a roof such as a thatch-, straw-, Japanese cypress bark-, Japanese cedar bark-, persimmon- or plate-roof.

One of these is a method for impregnating thatch or straw, which is a raw material of a roof, with a flame retarder and making the roof flame-retardant, and the other is a method for, by setting up a sprinkler on a roof or setting up a fire-proofing gun for spraying water in the vicinity of the roof, preventing occurrence of a fire by operating the sprinkler or fire-proofing gun when sparks or flying sparks are generated.
Patent Document 1: Japanese Published Unexamined Patent Application No. 2005-146810
Patent Document 2: Japanese Published Unexamined Patent Application No. H9-19510
Patent Document 3: Japanese Published Unexamined Patent Application No. H9-154969

EP 1 464 772 A1 discloses a roof construction for a thatched roof having a fire-proofing net on the inside of the combustible roof.

### Disclosure of the Invention

### Problems to be Solved by the Invention

In the former of the above conventional fire/flame-proofing methods, time and cost are wasted, aflame retarder seeps out from a roof by rainwater since it is generally soluble in water, and the effect of the retarder lowers over time. Further, the former method cannot be applied to an existing roof.

On the other hand, in the latter, exteriors of a roof and the periphery of a building of a cultural asset or the like are diminished by the existence of a sprinkler or fire-proofing gun, and it is necessary to set up a water tank beforehand and secure a necessary amount of water. Therefore, great expense and a space are required for the facilities and it is difficult for a general house to adopt the water tank. A sprinkler or fire-proofing gun can be set up later for an existing thatch-roof or the like according to this method. However, prevention of the spread of a fire is realized rather than protection of a roof from sparks or flying sparks by this method, and it can be said this method comprises firefighting facilities. That is, spraying water has difficulty in effectively preventing fire of a roof, because a roof is naturally formed to prevent water from penetrating into a house. Additionally, since a person is required to operate the sprinkler or fire-proofing gun at a suitable timing in this method, spread of a fire cannot be prevented when operation is delayed.

Although a combustible roof such as a thatch-roof has been conventionally covered with a metal net or fishing net having a relatively large scale spacing of approximately 10 to 100mm, the net aims to protect the roof from wind and snow, birds and animals, etc., and it is impossible to expect the net to exert a fire/flame-proofing function.

The present invention aims to provide a fire/flame-proofing roof, which is obtained by giving a fire/flame-proofing function to a combustible roof such as a thatch-or straw-roof or to an existing roof without raising cost and needing a large-scale water-reserving facility etc., and a fire/flame-proofing net used in the roof.

### Means for Solving the Problems

The above objects are solved by the claimed matter according to the independent claim.

An entire outer face of a roof composed of a combustible material such as thatch, straw or Japanese cypress bark is covered with a fire/flame-proofing net for blocking entry of sparks or flying sparks.

Preferably, the fire/flame-proofing net on an inside face of a roof is arranged at a predetermined interval from the inside face of the roof.

According to the invention, an outer face excepting an inside face of a roof composed of a combustible material such as thatch, straw or Japanese cypress bark is covered with a fire/flame-proofing net for blocking entry of sparks or flying sparks.

Preferably, a refractory board is arranged aside of the inside face of the roof according to the third aspect.

Preferably, a thermally foamable material is applied to the fire/flame-proofing net in the roof according to any one of the first to fourth aspects.

Preferably, provided is a fire/flame-proofing net in which a net-patterned body, which is obtained by mixing and kneading a thermally expandable material, carbonized layer forming agent and flame-retardant rubber with each other, is adhered to one face of a net base material composed of metal fibers, glass fibers or natural fibers and having a scale spacing of 1 to 5mm, and a reinforcing net, which is composed of the same material as that of the net base material and has a scale spacing of 30 to 150mm, is adhered to the other face of the net base material.

Preferably, provided is a fire/flame-proofing net in which a reinforcing net is interposed between two sheets of net base materials each composed of metal fibers, glass fibers or natural fibers and having a scale spacing of 1 to 5mm and a space between the sheets is filled with a thermally foamable material, the reinforcing net being composed of the same material as that of the net base material and having a scale spacing of 30 to 150mm.

According, the thermally foamable material is a material which foams and expands to form an insulating layer by heating or is then carbonized. Specifically, the material as thermally foamable refractory paint or fire-proofing paint, placed on the market regarding the building industry is exemplified. As an ingredient of the thermally foamable material, acryl resin, alkyd resin, urethane resin, foaming agent, carbonizing agent, etc., are cited.

### Effect of the Invention

A fire/flame-proofing roof according to the present invention is formed by covering an outer face of a combustible roof such as a thatch-roof or Japanese cypress bark-roof with a fire/flame-proofingnet for blocking entry of sparks or flying sparks. Therefore, compared with a conventional roof impregnated with a flame retarder or roof equipped with a water-spraying facility such as a sprinkler, cost can be greatly reduced, and the roof of the present invention can be constructed in a short time and easily constructed in accordance with the shape of a roof without diminishing the view of an existing combustible roof. Accordingly, by adopting the fire/flame-proofing roof according to the present invention to a building such as an existing traditional important cultural asset having a combustible roof such as a thatch-roof or Japanese cypress bark-roof, sparks or flying sparks can be reliably prevented from causing a fire to spread.

Additionally, since the fire/flame-proofing roof of the present invention can satisfy provisions of the Building Standards Law regarding performances of a roof, a combustible roof such as a thatch-roof or Japanese cypress bark-roof having a fire/flame-proofing function of the present invention can be adopted also in a new building in a city planning zone where a combustible roof cannot be conventionally employed.

According to the fire/flame-proofing roof of the present invention, entry of sparks or flying sparks is continuously blocked. Additionally, in a roof having a net to which a thermally foamable material is applied, the thermally foamable material foams, a refractory insulating layer is formed, sparks or flying sparks are absorbed in the insulating layer and a fire is automatically put out when the net is exposed to the sparks or flying sparks. Accordingly, it is unnecessary for persons to operate a sprinkler or the like every time a fire breaks out as in the case of a conventional sprinkler, and there is provided a remarkable advantage such that a fire is naturally put out.

Further, according to the roof of the present invention, the fire/flame-proofing net can prevent beetles, scarabs, centipedes or the like from laying eggs on the roof, and prevents birds such as crows or small animals such as giant flying squirrels or squirrels from making holes in the roof.

Furthermore, according to the roof of the present invention, since the fire/flame-proofing net absorbs impact from rainfall in a heavy rain, rainwater flows and falls on the surface of the fire/flame-proofing net and rainwater flowing on a surface of a roof body is reduced, the penetration rate of rainwater into the roof body is lowered, thereby raising the durability of the roof.

Additionally, since a reinforcing net is interposed in a fire/flame-proofing net according to the sixth and seventh aspects, a load from snow accumulated on a roof is dispersed and there is no possibility that snow breaks up the net.

### Brief Description of the Drawings

Fig. 1 is a structural view of a roof according to a first embodiment.
Fig. 2 is a structural view of a roof according to a second embodiment.
Fig. 3 is a front view of a fixing tool.
Fig. 4 is a structural view of a roof according to a third embodiment.
Fig. 5 is a perspective view of a fire/flame-proofing net according to a first embodiment.
Fig. 6 is a front view of a fire/flame-proofing net according to a second embodiment.
Fig. 7 is a cross sectional viewof the fire/flame-proofing net according to the second embodiment.
Fig. 8 is a front view of a fire/flame-proofing net according to a third embodiment.
Fig. 9 is a cross sectional viewof the fire/flame-proofing net according to the third embodiment.

### Description of the Reference Numerals

1, 21, 31 Fire/flame-proofing roof
2, 15 Fire/flame-proofing net
23 Refractory board

### Best Mode for Carrying Out the Invention

Next, embodiments of the present invention will be described with reference to the drawings. However, the present invention is not limited to the embodiments.

### Roof of the first embodiment

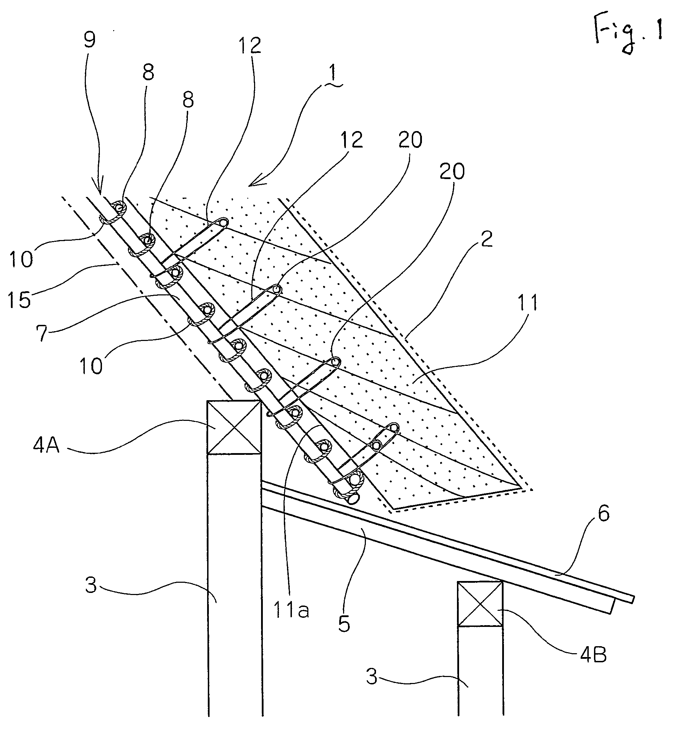

As shown in Fig. 1, in a fire/flame-proofing roof 1, a fire/flame-proofing net 2 (described below) is attached to an outer face of a roof such as a thatch-roof or straw-roof constructed by a traditional constructing method.

First, description will be given of a supporting structure of the fire/flame-proofing roof 1 according to the present embodiment. Beams 4A and 4B are laid and fixed on upper ends of a plurality of pillars 3, lean-to rafters 5 are mounted on the beam 4B on the front side of a house, and a lean-to 6 constituted by tiles, galvanized iron, slate or the like is provided on the lean-to rafters 5.

A plurality of log rafters 7 are laterally arranged on the beam 4A on the main side of the house at fixed intervals, a plurality of cross bamboos 8 are assembled at fixed intervals in a vertical direction so as to cross the rafters 7, the cross bamboos 8 and the rafters 7 are bound to each other with ropes 10 such as straw rope, hemp rope or palm rope at cross points, and a lattice-shaped backing 9 is formed as a whole. Thatch 11 having a thickness of approximately 45 to 60cm is mounted on the backing 9, pressing bamboos 20 inserted in the thatch 11 are bound to the rafters 7 with use of ropes 12 such as straw rope, hemp rope or palm rope, and thus the thatch 11 is fixed onto the backing 9.

The fire/flame-proofing net 2 having the structure described below is attached to an outer face excepting an inside face 11a of the thatch 11. Additionally, a fire/flame-proofing net 15 composed of metal fibers, glass fibers or noncombustible fibers of natural materials is stretched under the inside face 11a of the thatch 11 at an interval of approximately 30cm. Moreover, the scale spacing of the fire/flame-proofing net 15 is 1 to 3mm.

According to the roof 1 of the present embodiment, since the fire/flame-proofing net 2 is attached to an outer face excepting the inside face of the thatch 11, it reliably prevents sparks or flying sparks from spreading to the thatch 11 from the outside. Additionally, the fire/flame-proofing net 15 having the above structure is stretched on the inside face 11a of the thatch 11, sparks generated in an indoor open hearth or the like strike the fire/flame-proofing net 15. Here, since the fire/flame-proofing net 15 is stretched under the thatch 11 at an interval of approximately 30cm, there is no possibility that the sparks directly come into contact with the thatch 11 and burn the thatch 11.

### Roof of the second embodiment

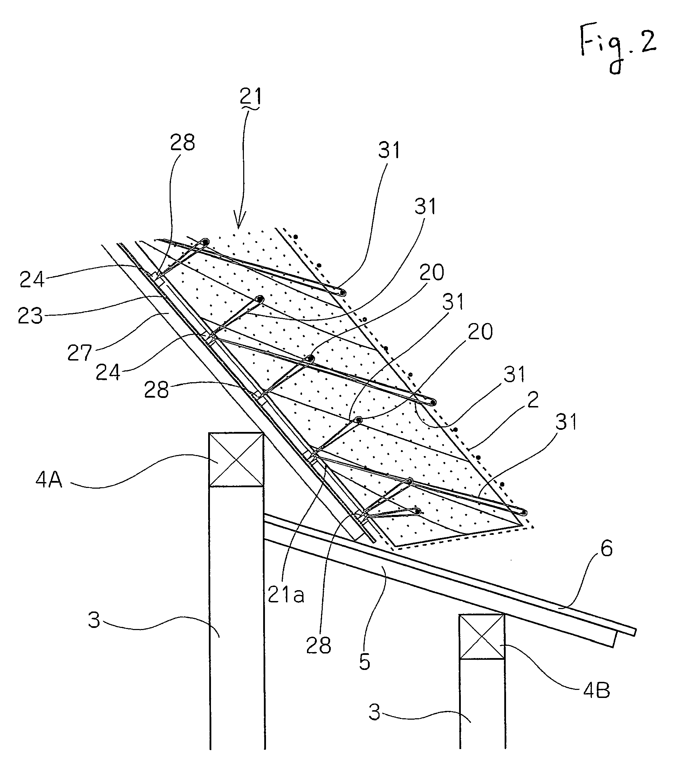

As shown in Fig. 2, a fire/flame-proofing roof 21 according to the present embodiment has the same supporting structure as that of the roof 1 of the first embodiment, and the same reference numerals are used for the same parts.

That is, in the fire/flame-proofing roof 21 according to the present embodiment, the beams 4A and 4B are laid and fixed on the upper ends of the plurality of pillars 3, the lean-to rafters 5 are mounted on the beam 4B on the front side of the house, and the lean-to 6 constituted by tiles, galvanized iron, slate or the like is provided on the lean-to rafters 5.

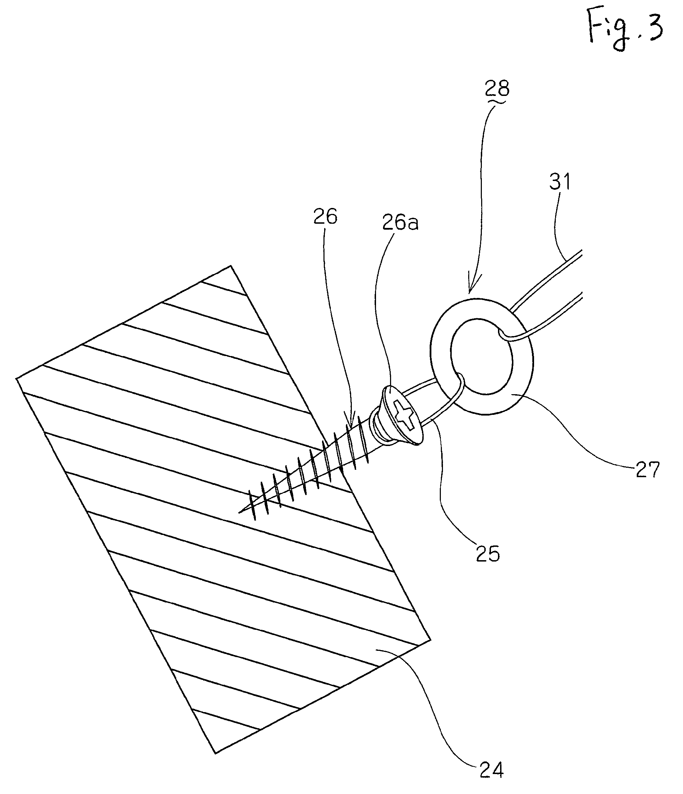

A plurality of rafters 27 each made of squared timber are laterally arranged on the beam 4A on the main side of the house at fixed intervals, a sheet of refractory board 23 is arranged on the rafters 27, and a plurality of backing wood 24, which laterally extend and are vertically arranged at fixed intervals, are fixed onto the refractory board 23 with nails (not shown). As shown in Fig. 3, a fixing tool 28, in which a ring-shaped member 27 such as a nut is attached to a head portion 26a of a screw 26 via a wire 25, is screwed into an upper face of the backing wood 24, and the ring-shaped member 27 of the fixing tool 28 is connected, through a wire 31, to the pressing bamboo 20 inserted in the thatch 11. That is, the ring-shaped wire 31 is attached to the ring-shaped member 27 of the fixing tool 28, the screw 26 of the fixing tool 28 is screwed into the backing wood 24 with the pressing bamboo 20 inserted in the ring-shaped wire 31, and thus the pressing bamboo 20 is fixed with it pulled inward. In the present embodiment, the fire/flame-proofing net 2 is attached to an outer face excepting a side face 21a aside of the refractory board 23, of the roof 21. Additionally, the wire 31 of the fixing tool 28 is connected to the fire/flame-proofing net 2.

### Roof of the third embodiment

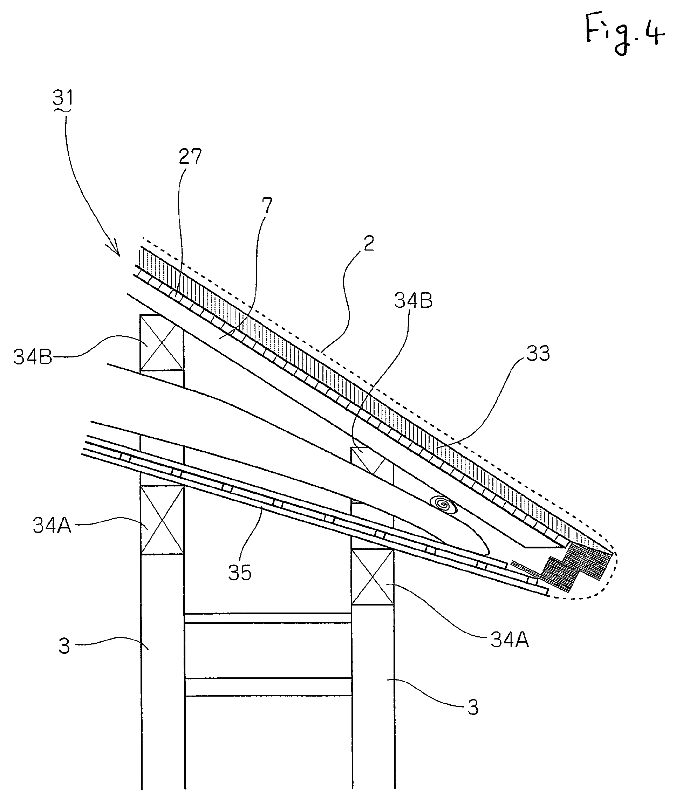

As shown in Fig. 4, the present embodiment relates to a roof 31 such as a Japanese cypress bark-, Japanese cedar bark-, persimmon- or plate-roof. In the present embodiment, beams 34A and 34B are laid and fixed on the plurality of pillars 3, makeup rafters 35 are laid and fixed on the lower adjacent beams 34A, the rafters 7 are laid and fixed on the upper adjacent beams 34B, a lath 27 is supported by the rafters 7, and Japanese cypress bark, Japanese cedar bark 33 or the like described above is laminated on an upper face of the lath 27.

In the present embodiment, the fire/flame-proofing net 2 is attached from a lower edge portion (front portion of the house) of the makeup rafter 35 to an upper face of the roof 31.

Next, a material used as the fire/flame-proofing net 2 in the above embodiments will be described.

### Fire/flame-proofing net of the first embodiment

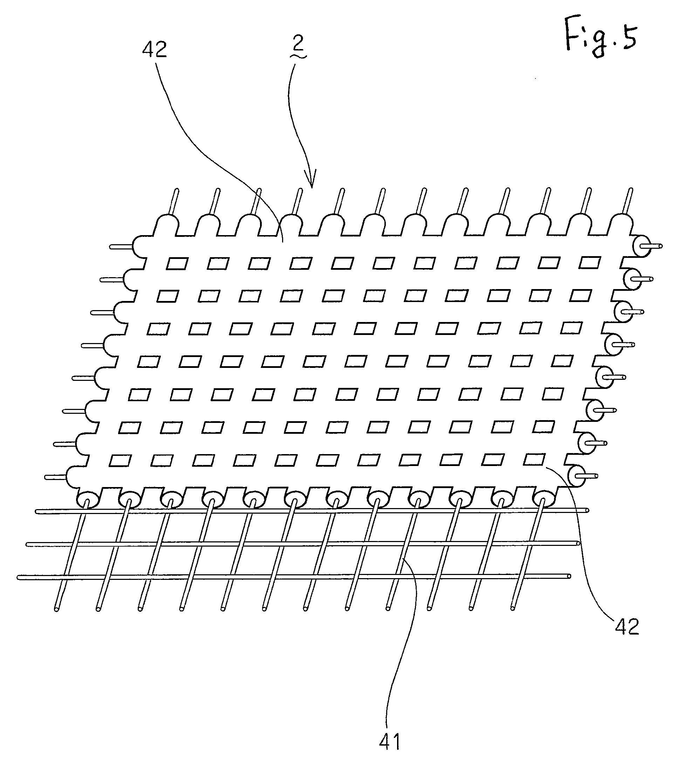

As shown in Fig. 5, in the fire/flame-proofing net 2, thermally foamable paint 42, which is foamed and carbonized by heat of sparks or flying sparks and forms a refractory insulating layer, is applied to a surface of a net body 41 composed of warps and wefts made of metal fibers, glass fibers or natural fibers, and weather-resistant paint (not shown) is applied to a surface of the paint 42 if necessary (not shown).

The scale spacing of the net body 41 is approximately 4 to 6mm, and the application amount of the thermally foamable paint 42 is approximately 600 to 800g/cm². When the fire/flame-proofing net 2 is heated by sparks or flying sparks, the thermally foamable paint 42 is foamed so as to have several tens of times the volume and carbonized to form the refractory insulating layer. At this time, a surface of each of the roofs 1, 21 and 31 is sealed, the sparks or flying sparks burn out without entering the fire/flame-proofing net 2, and a fire is naturally put out.

### Fire/flame-proofing net of the second embodiment

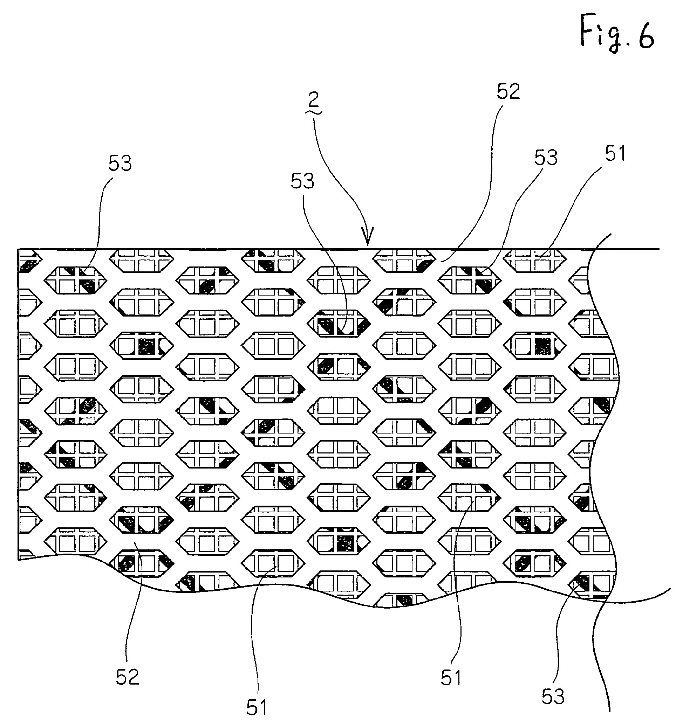

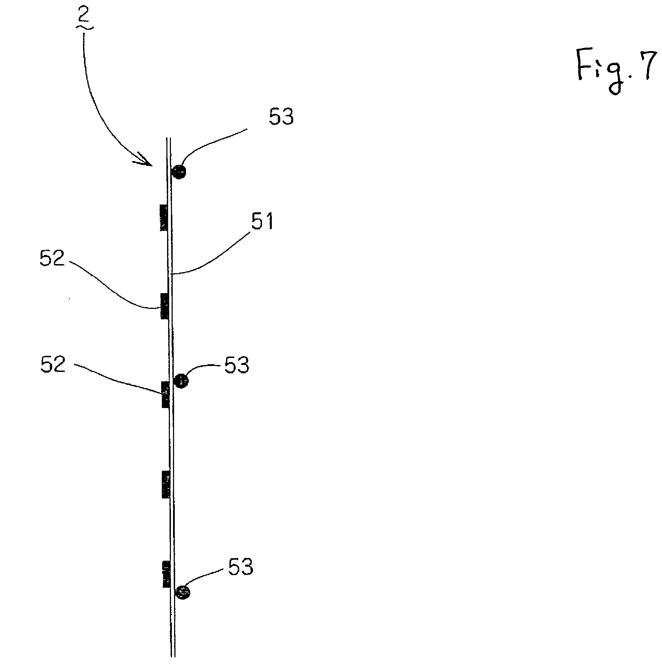

Next, the fire/flame-proofing net 2 of another embodiment will be described. As shown in Figs. 6 and 7, the fire/flame-proofing net 2 has a three-layer structure constituted by: a net base material 51; a thermally expandable net-patterned sheet 52 adhered to one face of the net base material 51; and a reinforcing net 53 adhered to the other face of the net base material 51.

The net base material 51 is composed of warps and wefts made of metal fibers, glass fibers or natural fibers and formed in a lattice shape, and has a scale spacing of 1 to 3mm. The thermally expandable net- patterned sheet 52 is formed by mixing and kneading a thermally expandable material such as pearlite or sodium silicate, a carbonized layer forming agent, a binder such as flame retardant rubber with each other in a net pattern. The reinforcing net 53 is formed by obliquely crossing metal fibers, glass fibers or natural fibers each having a thickness of 1 to 3mm in a lattice shape, and has a scale spacing of 40 to 100mm. The fire/flame-proofing net 2 is attached to each of the roofs 1, 21 and 31 so that the thermally expandable net-patterned sheet 52 faces up. According to the fire/flame-proofing net 2, sparks or flying sparks are, by the net base material 51, first prevented from entering the roof 1, 21 and 31 such as a thatch-roof, slide off the fire/flame-proofing net 2 and drop onto the ground. Alternatively, the sparks or flying sparks are reliably prevented from spreading to the roof 1, 21 and 31 such as a thatch-roof even if remaining on the fire/flame-proofing net 2, because the thermally expandable net-patterned sheet 52 is thermally expanded and carbonized to form the refractory insulating layer. In this case, the sparks or flying sparks are naturally put out or burn out.

### Fire/flame-proofing net of the third embodiment

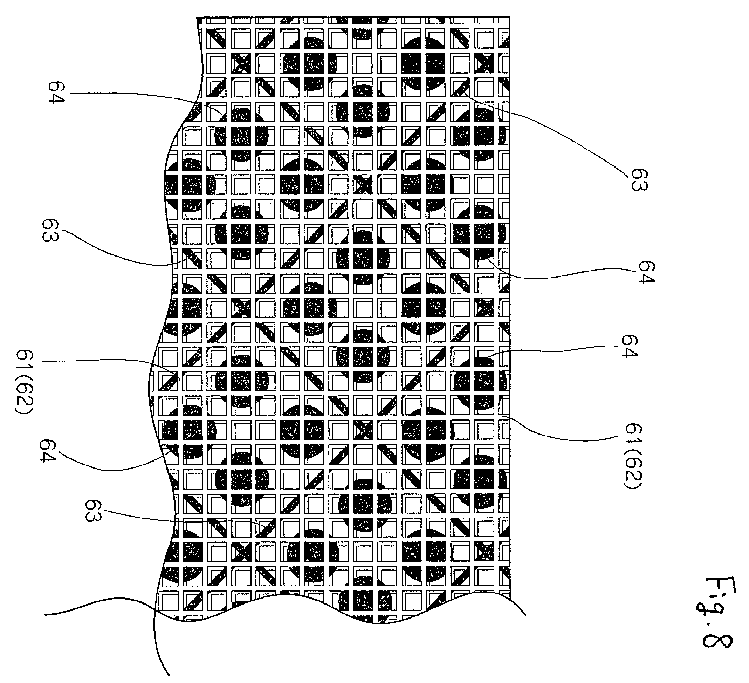

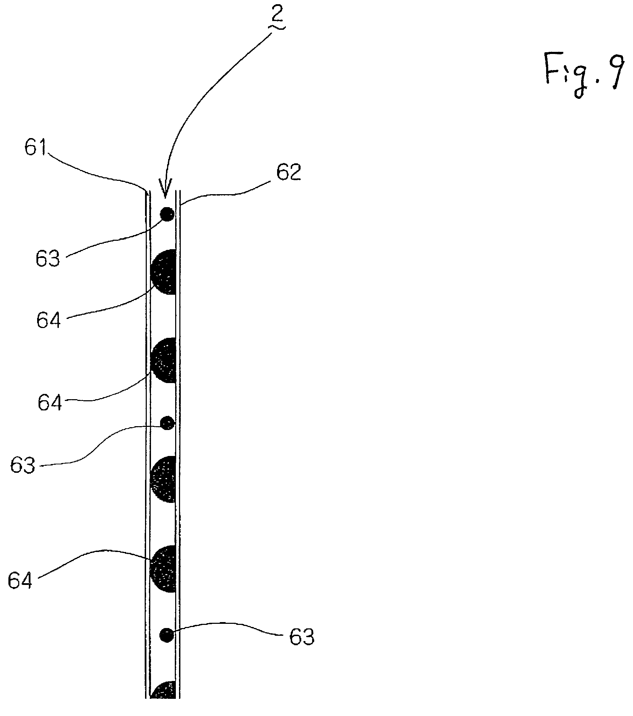

The fire/flame-proofing net 2 of another embodiment is shown in Figs. 8 and 9, and has a three-layer structure constituted by: two sheets of net base materials 61 and 62 arranged at an interval of approximately 5 to 10mm; and a reinforcing net 63 arranged between the net base materials 61 and 62. Stitches of the reinforcing net 63 arranged between the two sheets of net base materials 61 and 62 are filled with a thermally foamable material 64, and the thermally foamable material 64 is adhered to each of the net base materials 61 and 62.

Describing in detail, the net base material 61 and 62 have the same structure as that of the net base material 51 of the second embodiment. The reinforcing net 63 is formed by obliquely crossing metal fibers, glass fibers or natural fibers in a lattice shape similar to that of the second embodiment. However, in the present embodiment, the thickness thereof is 1 to 3mm and the scale spacing thereof is 40 to 50mm.

According to the fire/flame-proofing net 2 of the present embodiment, sparks or flying sparks are, by the net base material 61, first prevented from entering the roof 1, 21 and 31 such as a thatch-roof, slide off the fire/flame-proofing net 2 and drop onto the ground. Alternatively, the sparks or flying sparks are reliably prevented from spreading to the roof 1, 21 and 31 such as a thatch-roof even if remaining on the fire/flame-proofing net 2, because the thermally foamable material 64 is foamed and carbonized to form a refractory insulating layer between the two sheets of net base materials 61 and 62, and the layer wraps the sparks or the like. In this case, the sparks or the like are naturally put out or burn out.

Additionally, in the fire/flame-proofing nets 2 according to the second and third embodiments, copper wires are sometimes woven into at least either one of the warps or wefts of the net base materials 51, 61 and 62. In this case, verdigris generated by oxidization of the copper wires seeps out to the surface of the roof 1, 21 and 31 to prevent generation of moss and improve durability.

Further, by applying paint containing ingredients or minerals for reflecting ultraviolet rays to the fire/flame-proofing nets 2 according to the first to third embodiments, durability of the roofs 1, 21 and 31 is improved in some cases. This is because the paint effectively prevents ultraviolet rays from striking and damaging the roof 1, 21 and 31 such as a thatch-roof.

### Industrial Applicability

The present invention can be expected to be widely used for not only cultural assets or houses constructed by a conventional construction method but also new buildings in a city planning zone since it reliably realizes fire/flame-proofness for a combustible roof such as a thatch-roof or Japanese cypress bark-roof without taking a great deal of time and cost.

## Claims

1. A fire/flame-proofing roof comprising an outer face composed of a combustible material, said material being either from thatch, straw, Japanese cypress bark, Japanese cedar bark, or persimmon, and mounted on a lattice shaped backing (9) formed by a plurality of rafters (7) and by a plurality of lath-like members (8; 24; 27) crossing the rafters (7),
**characterized in that** the outer face excepting an inside face of the roof (11; 21) is covered with a fire/flame-proofing net (2) for blocking entry of sparks or flying sparks from the outside into the outer face of the roof.

2. The fire/flame-proofing roof according to claim 1, wherein a further fire/flameproofing net (15) on an inside face of the roof (11) is arranged at a predetermined interval from the inside face (11a) of the roof (11).

3. The fire/flame-proofing roof according to claim 2, wherein the predetermined interval is approximately 30cm.

4. The fire/flame-proofing roof according to claim 1, wherein a refractory board (27) is arranged aside of an inside face (21a) of the roof (21).

5. The fire/flame-proofing roof according to any one of claims 1 to 4, wherein a thermally foamable material (42) is applied to the fire/flame-proofing net (2).

6. The fire/flame-proofing roof according to any one of claims 1 to 4, wherein a net-patterned body (52) made from a mixture of a thermally expandable material, a carbonized layer forming agent and a flame-retardant rubber, is adhered to one face of a net base material (51) composed of metal fibers, glass fibers or natural fibers, said net base material (51) having a scale spacing of 1 to 5mm, and wherein a reinforcing net (53), is adhered to the other face of the net base material (51), said reinforcing net (53)being composed of the same material as that of the net base material (51) and having a scale spacing of 30 to 150mm.

7. The fire/flame-proofing roof according to any one of claims 1 to 4, wherein a reinforcing net (63) is interposed between two sheets of net base materials (61, 62), each sheet (61, 62) being composed of metal fibers, glass fibers or natural fibers and having a scale spacing of 1 to 5mm, and wherein a space between the sheets (61, 62) is filled with a thermally foamable material (64), the reinforcing net (63) being composed of the same material as that of the net base material (61, 62) and having a scale spacing of 30 to 150mm.

## Patentansprüche

1. Dach mit brand-/flammhemmender Funktion, aufweisend:
eine äußere Fläche, die aus einem brennbaren Material aufgebaut ist, das entweder aus Reet, Stroh, Rinde japanischer Zypresse, Rinde japanischer Zeder oder Persimon ist und das an einer gitterförmigen Stütze (9) befestigt ist, die aus einer Mehrzahl von Sparren (7) und einer Mehrzahl von lattenähnlichen Elementen (8; 24; 27) ausgebildet ist, die die Sparren (7) kreuzen,
**dadurch gekennzeichnet, dass** die äußere Fläche bis auf eine innere Fläche des Daches (11; 21) mit einem brand-/flammhemmenden Netz (2) zum Blockieren des Eintritts von Funken oder fliegenden Funken von außerhalb in die äußere Fläche des Daches bedeckt ist.

2. Dach mit brand-/flammhemmender Funktion gemäß Anspruch 1, wobei an einer inneren Fläche des Daches (11) ein weiteres brand-/flammhemmendes Netz (15) in einem vorgegebenen Abstand von der inneren Fläche (11a) des Daches (11) angebracht ist.

3. Dach mit brand-/flammhemmender Funktion gemäß Anspruch 2, wobei der vorgegebene Abstand etwa 30 cm beträgt.

4. Dach mit brand-/flammhemmender Funktion gemäß Anspruch 1, wobei eine feuerfeste Platte (27) entlang einer inneren Fläche (21a) des Daches (21) angeordnet ist.

5. Dach mit brand-/flammhemmender Funktion gemäß einem der Ansprüche 1 bis 4, wobei ein thermisch verschäumbares Material (42) auf das brand-/flammhemmende Netz (2) aufgebracht wird.

6. Dach mit brand-/flammhemmender Funktion einem der Ansprüche 1 bis 4,
wobei ein netzförmiger Körper (52), der aus einer Mischung eines thermisch expansionsfähigen Materials, eines Mittels zum Ausbilden einer verkohlten Schicht und eines flammhemmenden Gummis ausgebildet ist, an eine Seite eines Netzbasismaterials (51) geheftet wird, das aus Metallfasern, Glasfasern oder Naturfaser aufgebaut ist, wobei das besagte Netzbasismaterial (51) einen Teilstrichabstand von 1 bis 5 mm aufweist; und
wobei ein Verstärkungsnetz (53) an die andere Seite des Netzbasismaterials (51) angeheftet ist, wobei das Verstärkungsnetz (53) aus den gleichen Materialien aufgebaut ist wie das Netzbasismaterial (51) und einen Teilstrichabstand von 30 bis 150 mm aufweist.

7. Dach mit brand-/flammhemmender Funktion einem der Ansprüche 1 bis 4,
wobei ein Verstärkungsnetz (63) zwischen zwei Lagen von Netzbasismaterial (61, 62) liegt, wobei jede Lage (61, 62) aus Metallfasern, Glasfasern oder Naturfasern aufgebaut ist und einen Teilstrichabstand von 1 bis 5 mm aufweist, und
wobei ein Abstand zwischen den Lagen (61, 62) mit einem thermisch verschäumbaren Material (64) gefüllt ist und das Verstärkungsnetz (63) aus den gleichen Materialien wie das Netzbasismaterial (61, 62) aufgebaut ist und einen Teilstrichabstand von 30 bis 150 mm aufweist.

## Revendications

1. Toit pare-feu/flamme comprenant une face extérieure composée d'un matériau combustible, ledit matériau étant en chaume, en paille, en écorce de cyprès du Japon, en écorce de cèdre du Japon ou en plaqueminier, et monté sur un support en forme de treillis (9) formé par plusieurs chevrons (7) et par plusieurs éléments en forme de lattes (8 ; 24 ; 27) qui croisent les chevrons (7),
**caractérisé en ce que** la face extérieure exceptée une face intérieure du toit (11 ; 21) est couverte par un filet pare-feu/flamme (2) destiné à empêcher l'entrée d'étincelles ou des vols d'étincelles de l'extérieur vers la face extérieure du toit.

2. Toit pare-feu/flamme selon la revendication 1, étant précisé qu'un autre filet pare-feu/flamme (15) prévu sur une face intérieure du toit (11) est disposé à une distance prédéterminée de la face intérieure (11a) du toit (11).

3. Toit pare-feu/flamme selon la revendication 2, étant précisé que la distance prédéterminée est approximativement de 30 cm.

4. Toit pare-feu/flamme selon la revendication 1, étant précisé qu'un panneau réfractaire (27) est disposé à côté d'une face intérieure (21a) du toit (21).

5. Toit pare-feu/flamme selon l'une quelconque des revendications 1 à 4, étant précisé qu'un matériau à expansion thermique (42) est appliqué sur le filet pare-feu/flamme (2).

6. Toit pare-feu/flamme selon l'une quelconque des revendications 1 à 4, étant précisé qu'un corps à motif de filet (52) composé d'un mélange de matériau à expansion thermique, d'agent formant couche carbonisée et de caoutchouc retardateur de flamme est collé sur une face d'un matériau de base de filet (51) composé de fibres métalliques, de fibres de verre ou de fibres naturelles, ledit matériau de base de filet (51) présentant une division de 1 à 5 mm, et qu'un filet de renforcement (53) est collé sur l'autre face du matériau de base de filet (51), ledit filet de renforcement (53) étant composé du même matériau que le matériau de base de filet (51), et présentant une division de 30 à 150 mm.

7. Toit pare-feu/flamme selon l'une quelconque des revendications 1 à 4, étant précisé qu'un filet de renforcement (63) est placé entre deux épaisseurs de matériaux de base de filet (61, 62), chaque épaisseur (61, 62) étant composée de fibres métalliques, de fibres de verre ou de fibres naturelles, et présentant une division de 1 à 5 mm, et qu'un espace entre les épaisseurs (61, 62) est rempli avec un matériau à expansion thermique (64), le filet de renforcement (63) étant composé du même matériau que le matériau de base de filet (61, 62), et présentant une division de 30 à 150 mm.
